(19) Europäisches Patentamt / European Patent Office / Office européen des brevets

(11) **EP 4 393 635 A1**

(12) **EUROPEAN PATENT APPLICATION**
published in accordance with Art. 153(4) EPC

(43) Date of publication:
**03.07.2024 Bulletin 2024/27**

(21) Application number: **22876493.2**

(22) Date of filing: **29.09.2022**

(51) International Patent Classification (IPC):
*B23K 35/26* (2006.01)   *B23K 35/22* (2006.01)
*C22C 13/00* (2006.01)   *C22C 13/02* (2006.01)

(52) Cooperative Patent Classification (CPC):
**B23K 35/22; B23K 35/26; C22C 13/00; C22C 13/02**

(86) International application number:
**PCT/JP2022/036553**

(87) International publication number:
**WO 2023/054630 (06.04.2023 Gazette 2023/14)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **30.09.2021 JP 2021161532**

(71) Applicant: **Senju Metal Industry Co., Ltd.
Tokyo 120-8555 (JP)**

(72) Inventors:
• **YOKOYAMA Takahiro
  Tokyo 120-8555 (JP)**

• **IIJIMA Yuki
  Tokyo 120-8555 (JP)**
• **SAITO Takashi
  Tokyo 120-8555 (JP)**
• **YOSHIKAWA Shunsaku
  Tokyo 120-8555 (JP)**
• **DEI Kanta
  Tokyo 120-8555 (JP)**
• **SUGISAWA Kota
  Tokyo 120-8555 (JP)**

(74) Representative: **Grünecker Patent- und
Rechtsanwälte
PartG mbB
Leopoldstraße 4
80802 München (DE)**

(54) **SOLDER ALLOY, SOLDER BALL, SOLDER PREFORM, SOLDER PASTE, AND SOLDER JOINT**

(57)    Provided are a solder alloy, solder ball, solder preform, solder paste, and solder joint having excellent wettability and high reliability due to reduced solder joint breakage. This solder alloy has an alloy composition comprising, by mass%, 1.0-3.8% Ag, 0.4-0.8% Cu, 0.03-2.90% Sb, 1.1-4.2% In, 0.01-0.14% Ni, and 0.1-5.0% Bi, the remainder being Sn.

Fig. 2A

EP 4 393 635 A1

**Description**

Technical Field

The present invention relates to a solder alloy, a solder ball, a solder preform, a solder paste, and a solder joint to be used for various electronic equipment.

Background Art

In recent years, the performance of electronic components mounted on substrates has dramatically improved due to the higher functionality of commercial-off-the-shelf electronic equipment such as personal computers. The higher the performance of electronic equipment, the larger the current supplied to the electronic components is, and therefore, solder joints used on a substrate of commercial-off-the-shelf electronic equipment are exposed to high temperatures in some cases. When soldering is performed by step soldering, a solder joint is also exposed to a high temperature of approximately 150°C. On the other hand, it is easy to assume that the commercial-off-the-shelf electronic equipment is used in a cold weather region.

Examples of use of solder joints in which the solder joints are exposed to a harsh environment include, in addition to use for commercial-off-the-shelf electronic equipment, use for vehicle-mounted electronic equipment or industrial electronic equipment. Concerning vehicles, car electronics have advanced, and the transition from gasoline vehicles to electric vehicles and hybrid vehicles is underway. According to this, due to expansion of use, a substrate of vehicle-mounted electronic equipment may be disposed in a location to be exposed to a high temperature, such as an engine room. On the other hand, when the engine stops, solder joints may be exposed to a temperature as low as -40°C in a cold weather region. Further, depending on the use environment, a physical external force such as an impact may be applied to the electronic equipment.

Industrial electronic equipment is used in a location where it is difficult for a worker to perform a work. Therefore, as in the case of a substrate of vehicle-mounted electronic equipment, it is assumed that a substrate of industrial electronic equipment is exposed to an environment with extreme temperature changes or an external force is applied to the electronic equipment.

Incidentally, as an alloy for connecting a substrate and electronic components, an Sn-3Ag-0.5Cu solder alloy is widely used. The application range of the solder alloy is expanding, and according to this, as represented by the use for vehicle-mounted equipment, etc., solder alloys are being increasingly required to have high connection reliability so as not to cause rupture or deterioration of solder joints even in long-term use in a harsh environment.

However, when an electronic circuit is exposed to extreme temperature changes as described above, due to a difference in coefficient of thermal expansion between the electronic components and a printed circuit board, stress concentrates on solder joints. In addition, when an external force is applied to the electronic equipment, stress concentrates on solder joints with small sectional areas. Therefore, the use of the conventional Sn-3Ag-0.5Cu solder alloy involves the risk of rupture of solder joints, and a solder alloy that prevents this is demanded.

For example, in Patent Document 1, as a solder alloy that prevents growth of a crack of a solder joint, and suppresses generation of voids in a heat-cycle environment, an alloy composition potentially containing In and Co, etc., as optional elements in an Sn-Ag-Cu-Sb-Bi-Ni solder alloy is disclosed.

In Patent Document 2, as a solder alloy that forms a fine structure of an intermetallic compound and has high crack resistance, and has high durability by preventing voids and Cu leaching, and preventing growth of a crack after a heat cycle, an alloy composition that may contain Sb and In, etc., as optional elements in an Sn-Ag-Cu-Bi-Ni-Co-based solder alloy is disclosed.

In Patent Document 3, as a solder alloy having excellent wettability, and improved joining durability after a heat cycle, an alloy composition that may contain Co, etc., as optional elements in an Sn-Ag-Cu-Bi-Sb-In-Ni-based solder alloy is disclosed.

Citation List

Patent Documents

Patent Document 1: Japanese Unexamined Patent Application Publication No. 2017-170464
Patent Document 2: Japanese Unexamined Patent Application Publication No. 2014-037005
Patent Document 3: Japanese Patent Publication No. 6060199

Summary of Invention

Technical Problem

However, the solder alloys described in Patent Documents 1 to 3 are designed by mainly focusing on the heat cycle properties as described above. When electronic equipment is exposed to a heat cycle, due to a difference in coefficient of thermal expansion between a substrate and electronic components, stress is applied to solder joints. On the other hand, when vibration is applied to a vehicle-mounted electronic circuit, the way of application of stress is considered to be different from that of stress caused by expansion and contraction of the printed circuit board and electronic components occurring in a heat cycle. In this way, even when various stresses are applied to solder joints due to deterioration of a use environment caused by high functionality and expansion of the use of electronic equipment in recent years, in order to avoid the solder joints from being ruptured, the strength of the solder alloy itself needs to be improved.

In addition, examples of rupture of a solder joint include, in addition to rupture of a solder alloy constituting the solder joint, rupture at a joint interface caused by deterioration of wettability of the solder alloy. Thus, in order to form a solder joint with higher reliability than conventional solder joints, it is necessary to reconsider publicly known alloy compositions.

An object of the present invention is to provide a solder alloy, a solder ball, a solder preform, a solder paste, and a solder j oint, which have excellent wettability and high reliability by prevention of rupture of solder joints.

Solution to Problem

The inventors examined in detail stress to be applied to a solder joint due to a difference in coefficient of thermal expansion between a substrate and an electronic component, and focused on the fact that the stress to be applied to a solder joint was close to stress applied at the time of drawing in a physical test. When there is a large difference in coefficient of thermal expansion, one of the substrate and the electronic component greatly warps, so that a portion of a solder alloy constituting a solder joint is drawn. When the drawability is excellent, the solder joint is prevented from being ruptured even when great stress is applied thereto.

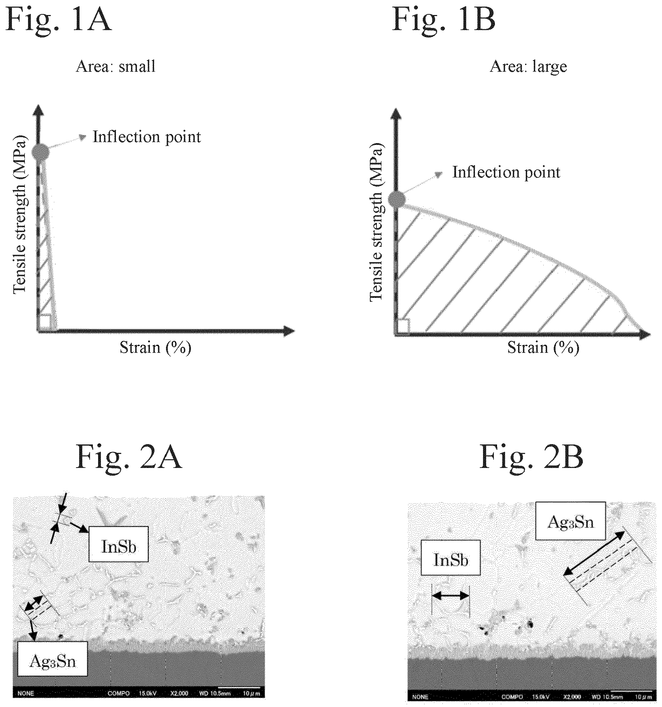

In addition, it is considered that, even when stress caused by a difference in coefficient of thermal expansion between a substrate and an electronic component is applied to a solder joint, as long as strain energy of a solder alloy constituting the solder joint is great, the solder joint can be prevented from being ruptured. As illustrated in Fig. 1, strain energy in the present invention is represented by a region following an inflection point in a stress-strain curve for explaining strain energy. An area enclosed by the vertical axis and the horizontal axis corresponds to strain energy. As illustrated in Fig. 1B, when tensile stress and a strain amount are both large, this indicates that the strain energy is large. Thus, in order to increase strain energy, high tensile strength and a large strain amount are required.

A possible cause of rupture of a solder joint is rupture at a joint interface between an electrode and a solder alloy. In order to prevent this rupture, the solder alloy needs to be improved in wettability. A melting point of a solder alloy changes with the alloy composition, and for wetting and spreading the solder alloy when the melting point is high, a soldering temperature needs to be increased. However, from the viewpoint of heat resistance, etc., of an electronic component to be mounted onto a substrate, it is not easy to change a set temperature of soldering equipment. Therefore, in order to improve the wettability of the solder alloy, the melting point of the solder alloy must be lowered.

Drawability, strain energy, and wettability are not considered in the conventional Sn-Ag-Cu-Sb-In-Ni-Bi solder alloys disclosed in Patent Documents 1 to 3 which were conventionally studied by focusing on the heat-cycle resistance. In the solder alloy disclosed in Example 23 in Patent Document 1 consisting of Ag: 3.0 mass%, Cu: 0.7 mass%, Bi: 3.2 mass%, In: 3.0 mass%, Sb: 3.0 mass%, Ni: 0.03 mass%, Co: 0.008 mass%, with the balance being Sn, it was found that the solder alloy had a high liquidus-line temperature and poor wettability. In the solder alloy disclosed in Example 40 in Patent Document 2 consisting of Ag: 3.0 mass%, Cu: 0.5 mass%, Sb: 1.5 mass%, In: 4.3 mass%, Ni: 0.05 mass%, Bi: 0.5 mass%, Co: 0.005 mass%, with the balance being Sn, it was found that the solder alloy had poor drawability. In the solder alloy disclosed in Example 54 in Patent Document 3 consisting of Ag: 0.1 mass%, Cu: 0.7 mass%, Sb: 0.08 mass%, In: 2 mass%, Ni: 0.065 mass%, Bi: 4.5 mass%, Co: 0.003 mass%, with the balance being Sn, it was found that the solder alloy had a coarse alloy structure.

Therefore, the inventors earnestly studied an alloy composition that realized all of an improvement in wettability, an improvement in strain energy, and high drawability and high tensile strength at a time even in a conventional solder alloy considered to have excellent heat-cycle resistance. As a result, the inventors found that, in an Sn-Ag-Cu-Sb-In-Ni-Bi solder alloy, when it had a predetermined content of Bi, reduction of contents of In and Sb caused crystallization of fine InSb and contributed to an improvement in drawability. Since it was found that Bi dissolved in Sn, a Bi content falling within a predetermined range contributed to an improvement in tensile strength. In addition, it was found that Ag and Ni contributed to refinement of the alloy structure. Ag is presumed to promote densification of the alloy structure since Ag forms a fine Ag$_3$Sn network. In addition, it was found that Ni contributed to refinement of the alloy structure at a joint interface. In addition to this, it was found that Cu suppressed an increase in liquidus-line temperature in a range in which Ag, Ni, Bi, In, and Sb satisfied the above-described properties. As described, based on the finding that the above-described effects could be exerted only when the contents of the respective constituent elements were within predetermined ranges, the present invention was completed.

The present invention obtained from these findings is as follows.

(1) A solder alloy having an alloy composition consisting of, by mass%,

Ag: 1.0 to 3.8%,
Cu: 0.4 to 0.8%,
Sb: 0.03 to 2.90%,
In: 1.1 to 4.2%,
Ni: 0.01 to 0.14%,
Bi: 0.1 to 5.0%, with the balance being Sn.

(2) The solder alloy according to (1) above, further comprising, by mass%, Co: 0.1% or less.
(3) The solder alloy according to (1) or (2) above, further comprising, by mass%, at least one of Zr, Fe, Ge, Ga, P, As, Pb, Zn, Mg, Cr, Ti, Mn, Mo, Pt, Pd, Au, Al, and Si: 0.1% or less in total.
(4) The solder alloy according to any one of (1) to (3) above, satisfying at least one of the following relations (1) to (4):

$$113 \leq Sn/Cu \leq 165 \qquad \text{Relation (1)}$$

$$0.06 \leq Ag \times Ni \leq 0.19 \qquad \text{Relation (2)}$$

$$0.10 \leq Bi/(In+Sb) \leq 0.32 \qquad \text{Relation (3)}$$

$$0.432 \leq (In+Sb)/(Ag+In+Bi) \leq 0.999 \qquad \text{Relation (4)}$$

wherein Sn, Cu, Ag, Ni, Bi, In, and Sb in the relations (1) to (4) above each represent the contents (mass%) thereof in the alloy composition.
(5) A solder ball consisting of the solder alloy according to any one of (1) to (4) above.
(6) A solder preform consisting of the solder alloy according to any one of (1) to (4) above.
(7) A solder paste comprising a solder powder consisting of the solder alloy according to any one of (1) to (4) above.
(8) A solder joint comprising the solder alloy according to any one of (1) to (4) above.

Brief Description of Drawings

Fig. 1 is diagrams illustrating stress-strain curves for describing strain energy, Fig. 1A is a diagram describing that an area enclosed by an axis representing tensile strength and an axis representing strain is small, and Fig. 1B is a diagram describing that an area enclosed by the axis representing tensile strength and the axis representing strain is large.
Fig. 2 is sectional SEM photographs of solder alloys, Fig. 2A illustrates that in Example 3, and Fig. 2B illustrates that in Comparative Example 3.
Fig. 3 is sectional SEM photographs of solder alloys, Fig. 3A illustrates that in Example 3, and Fig. 3B illustrates that in Comparative Example 13.

Description of Embodiments

The present invention is described in more detail below. In the present description, "%" relating to the solder alloy composition refers to "mass%" unless otherwise specified.

1. Solder Alloy

(1) Ag: 1.0 to 3.8%

Ag forms a fine $Ag_3Sn$ network, and can promote densification of the solder alloy. When the Ag content is less than 1.0%, $Ag_3Sn$ cannot be crystallized, and the drawability deteriorates. In addition, an $Ag_3Sn$ network cannot be formed. A lower limit of the Ag content is 1.0% or more, preferably 1.5% or more, more preferably 2.0% or more, further preferably 2.5% or more, and particularly preferably 3.0% or more. On the other hand, when the Ag content is more than 3.8%, coarse $Ag_3Sn$ crystallizes, and accordingly, the alloy structure does not become dense, and the drawability deteriorates. An upper limit of the Ag content is 3.8% or less, and preferably 3.4% or less.

(2) Cu: 0.4 to 0.8%

Cu can maintain excellent wettability of molten solder by suppressing an increase in liquidus-line temperature. When the Cu content is less than 0.4% or more than 0.8%, the liquidus-line temperature increases, the fluidity at a joining temperature deteriorates, and the wettability deteriorates. A lower limit of the Cu content is 0.4% or more, preferably 0.5% or more, and further preferably 0.6% or more. An upper limit of the Cu content is 0.8% or less, and preferably 0.7% or less.

(3) Sb: 0.03 to 2.90%

Sb causes crystallization of fine InSb by being added simultaneously with In, and can improve the drawability. When the Sb content is less than 0.03%, InSb does not crystallize, and the effect of improving the drawability cannot be obtained. A lower limit of the Sb content is 0.03% or more, and preferably 0.05% or more. On the other hand, when the Sb content is more than 2.90%, the liquidus-line temperature increases and the wettability deteriorates. An upper limit of the Sb content is 2.90% or less, preferably 2.50% or less, and more preferably 2.00% or less.

(4) In: 1.1 to 4.2%

In causes crystallization of fine InSb by being added simultaneously with Sb, and can improve the drawability. When In content is less than 1.1%, InSb does not crystallize, and the effect of improving the drawability cannot be obtained. A lower limit of the In content is 1.1% or more, preferably 2.0% or more, and more preferably 3.0% or more. On the other hand, when the In content is more than 4.2%, a coarse InSb compound crystallizes due to simultaneous addition with Ag, and accordingly, the drawability deteriorates. An upper limit of the In content is 4.2% or less, and preferably 4.0% or less.

(5) Ni: 0.01 to 0.14%

Ni blocks diffusion of Cu to Sn after soldering, and suppresses growth of an intermetallic compound that precipitates at a joint interface. Further, by suppressing coarsening of the intermetallic compound that precipitates at the joint interface, Ni can strengthen the joint interface. When the Ni content is less than 0.01%, the alloy structure does not become sufficiently dense, and the strain energy is not improved. In addition, the joint interface cannot be strengthened. A lower limit of the Ni content is 0.01% or more, preferably 0.02% or more, more preferably 0.03% or more, and further preferably 0.04% or more. On the other hand, when the Ni content is more than 0.14%, due to an increase in liquidus-line temperature, the wettability deteriorates. An upper limit of the Ni content is 0.09% or less, preferably 0.06% or less, and more preferably 0.05% or less.

(6) Bi: 0.1 to 5.0%

Bi dissolves in Sn, and can accordingly improve the tensile strength. When the Bi content is less than 0.1%, the tensile strength is not improved. A lower limit of the Bi content is 0.1% or more, and preferably 0.5% or more. On the other hand, when the Bi content is more than 5.0%, due to segregation of Bi, the solder alloy embrittles, and deteriorates in tensile strength and drawability. An upper limit of the Bi content is 5.0% or less, preferably 4.0% or less, more preferably 3.0% or less, further preferably 2.0% or less, and particularly preferably 1.0% or less.

(6) Balance: Sn

The balance of the solder alloy according to the present invention is Sn. In addition to the above-described elements, unavoidable impurity may be contained. Even when unavoidable impurity is contained, it does not affect the above-described effects.

(7) Co: 0.100% or less

Co is an optional element having the effects of suppressing growth of the intermetallic compound and refining the alloy structure. An upper limit of the Co content is preferably 0.100% or less, more preferably 0.050% or less, and further preferably 0.010% or less. Although a lower limit of the Co content is not particularly limited, from the viewpoint of refining the alloy structure, the lower limit is preferably 0.001% or more, more preferably 0.003% or more, further preferably 0.005% or more, still further preferably 0.006% or more, particularly preferably 0.007% or more, and most preferably 0.008% or more.

(9) Other Optional Elements

In addition to the above-described elements, the solder alloy according to the present invention may contain at least one of Zr, Fe, Ge, Ga, P, As, Pb, Zn, Mg, Cr, Ti, Mn, Mo, Pt, Pd, Au, Al, and Si: 0.1% or less in total. In particular, concerning Fe, it has an effect of suppressing growth of an intermetallic compound that precipitates at a joint interface, so that, by containing Fe in the solder alloy of the present invention, the effects of Ni can be further improved. Even when a content of these elements is 0.1% or less, a coarse compound does not precipitate, and the above-described effects of the present invention can be exerted. A total content of these elements is preferably 0.1% or less, more preferably 0.09% or less, further preferably 0.05% or less, and particularly preferably 0.015% or less. A content of each element is preferably 0.0003 to 0.02% although not particularly limited. Among these, like Ni, Fe blocks diffusion of Cu to Sn after soldering, and suppresses growth of an intermetallic compound that precipitates at a joint interface. Further, by suppressing coarsening of the intermetallic compound that precipitates at the joint interface, Fe can strengthen the joint interface.

(10) Relations (1) to (4)

$$113 \leq Sn/Cu \leq 165 \quad \text{Relation (1)}$$

$$0.06 \leq Ag \times Ni \leq 0.19 \quad \text{Relation (2)}$$

$$0.10 \leq Bi/(In+Sb) \leq 0.32 \quad \text{Relation (3)}$$

$$0.432 \leq (In+Sb)/(Ag+In+Bi) \leq 0.999 \quad \text{Relation (4)}$$

Sn, Cu, Ag, Ni, Bi, In, and Sb in the relations (1) to (4) above each represent the contents (mass%) thereof in the alloy composition.

It is preferable that the solder alloy according to the present invention satisfies at least one of the relations (1) to (4). An alloy composition satisfying all of these relations can exert particularly excellent effects.

Cu greatly contributes to the liquidus-line temperature. Therefore, when its proportion to Sn as a main constituent satisfies the relation (1), a liquidus-line temperature that exhibits wettability suitable for soldering is realized. A lower limit of the relation (1) is preferably 113 or more, more preferably 123 or more, and particularly preferably 125 or more. An upper limit of the relation (1) is preferably 165 or less, more preferably 151 or less, and further preferably 132 or less.

In the solder alloy according to the present invention, Ag contributes to densification of the alloy structure, and Ni contributes to homogeneous densification of a joint interface. Both of these elements can crystallize a compound with Sn, and when their respective contents are well-balanced, coarsening of the compound is suppressed, and densification of the alloy structure is promoted. A lower limit of the relation (2) is preferably 0.06 or more, more preferably 0.09 or more, and further preferably 0.10 or more. An upper limit of the relation (2) is preferably 0.19 or less, and more preferably 0.15 or less.

Bi, In, and Sb contribute to mechanical properties of the solder alloy according to the present invention. Bi contributes to an improvement in tensile strength, and In and Sb contribute to an improvement in drawability. When a content of any of the elements is excessive or insufficient, as described above, both of the tensile strength and the drawability may not be secured. Therefore, it is preferable that the solder alloy according to the present invention satisfies the relation (3). A lower limit of the relation (3) is preferably 0.10 or more, more preferably 0.14 or more, and further preferably 0.16 or more. An upper limit of the relation (3) is preferably 0.32 or less, more preferably 0.25 or less, and further preferably 0.200 or less.

The solder alloy according to the present invention can be further improved in drawability by satisfying the relation (4). For this, in such a manner that a balance is kept between the total of contents of In and Sb that improve the drawability by being added, and the total of contents of Ag, In, and Bi that deteriorate the drawability when their contents are high, these elements are preferably contained. A lower limit of the relation (4) is preferably 0.432 or more, more preferably 0.433 or more, and further preferably 0.442 or more. An upper limit of the relation (4) is preferably 0.999 or less, more preferably 0.769 or less, and further preferably 0.750 or less.

2. Solder Ball

The solder alloy according to the present invention can be used as a solder ball. A solder ball according to the present invention is used to form bumps of electrodes and a substrate of a semiconductor package such as a BGA (Ball Grid Array). A diameter of the solder ball according to the present invention is preferably within a range of 1 to 1000 $\mu$m. The solder ball can be produced by a general solder ball production method.

3. Solder Preform

A shape of a solder preform according to the present invention is not particularly limited, and can be used in the form of a plate shape, a ring shape, a cylindrical shape, a ribbon shape, a square shape, a disc shape, a washer shape, a chip shape, and a wire shape, etc. The solder preform may internally contain high-melting-point metallic grains (for example, Ni grains and Cu grains, and an alloy powder mainly containing Ni and Cu) that have a melting point higher than that of the solder alloy and are easily wet with molten solder.

4. Solder Paste

The solder alloy according to the present invention can be used as solder paste. The solder paste is obtained by mixing a solder alloy powder with a small amount of flux and processing these in paste form. The solder alloy according to the present invention may be used as solder paste for mounting an electronic component to a printed circuit board by a reflow soldering method. The flux to be used for the solder paste may be either a water-soluble flux or a water-insoluble flux. Typically, a rosin-based flux as a rosin-based water-insoluble flux is used.

5. Solder Joint

The solder joint according to the present invention connects an IC chip and a substrate (interposer) of the IC chip in a semiconductor package, or joins and connects a semiconductor package and a printed circuit board. That is, the solder joint according to the present invention is a connecting portion of an electrode, and can be formed by using general soldering conditions.

The joining method using the solder alloy according to the present invention may be performed in the usual manner by using, for example, a reflow method. A heating temperature may be adjusted as appropriate according to heat resistance of a chip and a liquidus-line temperature of the solder alloy. Other joining conditions can be adjusted as appropriate according to an alloy composition of the solder alloy.

Examples

Solder alloys consisting of the alloy compositions described in Tables 1 to 3 were prepared, and the liquidus-line temperature was measured as evaluation 1, the denseness of the solder structure was evaluated as evaluation 2, the drawability was evaluated as evaluation 3, the tensile strength was evaluated as evaluation 4, and homogeneous refinement of a joint interface was evaluated as evaluation 5.

- Evaluation 1: Liquidus-line Temperature

The respective solder alloys described in Table 1 were produced, and their liquidus-line temperatures were measured. The liquidus-line temperatures were measured by a method using DSC similar to the solidus temperature measuring method of JIS Z 3198-1. A case where the liquidus-line temperature was 200 to 218°C was evaluated as "excellent," a case where the liquidus-line temperature was more than 218°C and 220°C or less was evaluated as "good," a case where the liquidus-line temperature was more than 220°C was evaluated as "poor," and a case where the liquidus-line temperature was less than 200°C was also evaluated as "poor."

- Evaluation 2: Denseness of Solder Structure

Solder alloys having the alloy compositions described in Table 1 were casted into a predetermined mold, and obtained solder alloys were molded by resin and ground, portions where the solder alloys were ground by about half were photographed at a magnification of 1000 with an FE-SEM. From the taken photograph, the denseness of $Ag_3Sn$ and refinement of InSb were evaluated by cross-section observation and mapping composition analysis using EDS. Each compound was identified by mapping composition analysis, and a largest crystal grain was visually selected. For this crystal grain, two parallel tangent lines were drawn so that a distance between them became largest, and this distance was defined as a maximum crystal grain size. A case where the maximum crystal grain size of $Ag_3Sn$ was 5 $\mu$m or more and 10 $\mu$m or less was evaluated as "excellent," a case where the maximum crystal grain size was more than 10 $\mu$m and 15 $\mu$m or less was evaluated as "good," and a case where the maximum crystal grain size was less than 5 $\mu$m and a case where the maximum crystal grain size was more than 15 $\mu$m were evaluated as "poor." A case where the maximum crystal grain size of InSb was 5 $\mu$m or less was evaluated as "excellent," a case where the maximum crystal grain size was more than 5 $\mu$m and 10 $\mu$m or less was evaluated as "good," and a case where the maximum crystal grain size was more than 10 $\mu$m was evaluated as "poor." In the evaluation 2, a case where both of $Ag_3Sn$ and InSb were evaluated as "excellent" was evaluated as "excellent," and a case where either one was evaluated as "excellent" and the other was evaluated as "good" was evaluated as "good," and a case where either one was evaluated as "poor" was evaluated as "poor."

- Evaluation 3, 4: Drawability, Tensile Strength

The drawability and the tensile strength were measured according to JIS Z 3198-2. Each solder alloy described in Table 1 was casted into a mold, and a test piece with a gauge length of 30 mm and a diameter of 8 mm was fabricated. The fabricated test piece was drawn with a stroke of 6 mm/min at a room temperature by Type 5966 manufactured by Instron, and a strength when the test piece ruptured was measured. The drawability was measured from a proportion of a sectional area $S_1$ of a ruptured portion of the test piece to a sectional area $S_0$ before the test. A case where the tensile strength was 65 MPa or more was evaluated as "excellent," a case where the tensile strength was 60 MPa or more and less than 65 MPa was evaluated as "good," and a case where the tensile strength was less than 60 MPa was evaluated as "poor." A case where the drawability was 50% or more was evaluated as "good," and a case where the drawability was less than 50% was evaluated as "poor."

Evaluation results are shown in Tables 1 to 3.

- Evaluation 5: Homogeneous Refinement of Joint Interface

A solder ball with $\phi$0.6 mm was prepared from each solder alloy described in Table 1. After this solder ball was mounted onto a Cu pad, reflow soldering was performed at 245°C, and accordingly, a solder bump was formed. By measuring a thickness of an intermetallic compound (IMC) from a sectional SEM photograph imaging a section of a joint interface between the solder bump and the Cu pad, homogeneous refinement of the joint interface was evaluated. When the joint interface is homogeneously refined, the intermetallic compound layer becomes thin, so that, in evaluation 5, homogeneous refinement was evaluated based on a thickness of the intermetallic compound. The sectional SEM photograph was analyzed by image analysis software (Scandium made by SEIKA CORPORATION), and a thickness of the intermetallic compound layer was measured. A case where the thickness of the intermetallic compound was 1.5 $\mu$m or less was evaluated as "excellent," a case where the thickness was more than 1.5 $\mu$m and 2.5 $\mu$m or less was evaluated as "good," and a case where the thickness was more than 2.5 $\mu$m was evaluated as "poor."

Evaluation results are shown in Tables 1 to 3.

Table 1

| | Sn | Ag | Cu | Sb | In | Ni | Bi | Co | Others | Relation(1) Sn/Cu | Relation(2) Ag×Ni | Relation(3) Bi/(In+Sb) | Relation(4) (In+Sb)/(Ag+In+Bi) |
|---|---|---|---|---|---|---|---|---|---|---|---|---|---|
| Ex.1 | Bal. | 1.0 | 0.7 | 2.00 | 3.0 | 0.05 | 1.0 | | | 132 | 0.05 | 0.20 | 1.000 |
| Ex.2 | Bal. | 2.0 | 0.7 | 2.00 | 3.0 | 0.05 | 1.0 | | | 130 | 0.10 | 0.20 | 0.833 |
| Ex.3 | Bal. | 3.0 | 0.7 | 2.00 | 3.0 | 0.05 | 1.0 | | | 129 | 0.15 | 0.20 | 0.714 |
| Ex.4 | Bal. | 3.8 | 0.7 | 2.00 | 3.0 | 0.05 | 1.0 | | | 128 | 0.19 | 0.20 | 0.641 |
| Ex.5 | Bal. | 3.0 | 0.4 | 2.00 | 3.0 | 0.05 | 1.0 | | | 226 | 0.15 | 0.20 | 0.714 |
| Ex.6 | Bal. | 3.0 | 0.5 | 2.00 | 3.0 | 0.05 | 1.0 | | | 181 | 0.15 | 0.20 | 0.714 |
| Ex.7 | Bal. | 3.0 | 0.6 | 2.00 | 3.0 | 0.05 | 1.0 | | | 151 | 0.15 | 0.20 | 0.714 |
| Ex.8 | Bal. | 3.0 | 0.8 | 2.00 | 3.0 | 0.05 | 1.0 | | | 113 | 0.15 | 0.20 | 0.714 |
| Ex.9 | Bal. | 3.0 | 0.7 | 0.03 | 3.0 | 0.05 | 1.0 | | | 132 | 0.15 | 0.33 | 0.433 |
| Ex.10 | Bal. | 3.0 | 0.7 | 0.05 | 3.0 | 0.05 | 1.0 | | | 132 | 0.15 | 0.33 | 0.436 |
| Ex.11 | Bal. | 3.0 | 0.7 | 0.50 | 3.0 | 0.05 | 0.5 | | | 132 | 0.15 | 0.14 | 0.538 |
| Ex.12 | Bal. | 3.0 | 0.7 | 1.00 | 3.0 | 0.05 | 1.0 | | | 130 | 0.15 | 0.25 | 0.571 |
| Ex.13 | Bal. | 3.0 | 0.7 | 2.90 | 3.0 | 0.05 | 1.0 | | | 128 | 0.15 | 0.17 | 0.843 |
| Ex.14 | Bal. | 3.0 | 0.7 | 2.00 | 1.1 | 0.05 | 1.0 | | | 132 | 0.15 | 0.32 | 0.608 |
| Ex.15 | Bal. | 3.0 | 0.7 | 2.00 | 2.0 | 0.05 | 1.0 | | | 130 | 0.15 | 0.25 | 0.667 |
| Ex.16 | Bal. | 3.0 | 0.7 | 2.00 | 4.0 | 0.05 | 1.0 | | | 128 | 0.15 | 0.17 | 0.750 |
| Ex.17 | Bal. | 3.0 | 0.7 | 2.00 | 4.2 | 0.05 | 1.0 | | | 127 | 0.15 | 0.16 | 0.756 |
| Ex.18 | Bal. | 3.0 | 0.7 | 2.00 | 3.0 | 0.01 | 1.0 | | | 129 | 0.03 | 0.20 | 0.714 |
| Ex.19 | Bal. | 3.0 | 0.7 | 2.00 | 3.0 | 0.02 | 1.0 | | | 129 | 0.06 | 0.20 | 0.714 |
| Ex.20 | Bal. | 3.0 | 0.7 | 2.00 | 3.0 | 0.03 | 1.0 | | | 129 | 0.09 | 0.20 | 0.714 |
| Ex.21 | Bal. | 3.0 | 0.7 | 2.00 | 3.0 | 0.04 | 1.0 | | | 129 | 0.12 | 0.20 | 0.714 |
| Ex.22 | Bal. | 3.0 | 0.7 | 2.00 | 3.0 | 0.06 | 1.0 | | | 129 | 0.18 | 0.20 | 0.714 |
| Ex.23 | Bal. | 3.0 | 0.7 | 2.00 | 3.0 | 0.05 | 0.1 | | | 130 | 0.15 | 0.02 | 0.820 |
| Ex.24 | Bal. | 3.0 | 0.7 | 2.00 | 3.0 | 0.05 | 0.5 | | | 130 | 0.15 | 0.10 | 0.769 |
| Ex.25 | Bal. | 3.0 | 0.7 | 2.00 | 3.0 | 0.05 | 2.0 | | | 128 | 0.15 | 0.40 | 0.625 |

EP 4 393 635 A1

(continued)

|  | Sn | Ag | Cu | Sb | In | Ni | Bi | Co | Others | Relation(1) Sn/Cu | Relation(2) Ag×Ni | Relation(3) Bi/(In+Sb) | Relation(4) (In+Sb)/(Ag+In+Bi) |
|---|---|---|---|---|---|---|---|---|---|---|---|---|---|
| Ex.26 | Bal. | 3.0 | 0.7 | 2.00 | 3.0 | 0.05 | 3.0 |  |  | 126 | 0.15 | 0.60 | 0.556 |
| Ex.27 | Bal. | 3.0 | 0.7 | 2.00 | 3.0 | 0.05 | 4.0 |  |  | 125 | 0.15 | 0.80 | 0.500 |

Table 1 continued

| | Evaluation 1: Liquidus-line temperature | Evaluation 2: Denseness of solder structure | Evaluation 3: Drawability | Evaluation 4: Tensile strength | Evaluation 5: Homogeneous refinement of joint interface | Comprehensive evaluation |
|---|---|---|---|---|---|---|
| Ex. 1 | excellent | good | good | excellent | good | good |
| Ex. 2 | excellent | excellent | good | excellent | excellent | good |
| Ex. 3 | excellent | excellent | good | excellent | excellent | good |
| Ex. 4 | excellent | excellent | good | excellent | excellent | good |
| Ex. 5 | good | excellent | good | excellent | excellent | good |
| Ex. 6 | good | excellent | good | excellent | excellent | good |
| Ex. 7 | excellent | excellent | good | excellent | excellent | good |
| Ex. 8 | excellent | excellent | good | excellent | excellent | good |
| Ex. 9 | excellent | excellent | good | good | excellent | good |
| Ex. 10 | excellent | excellent | good | good | excellent | good |
| Ex. 11 | excellent | excellent | good | excellent | excellent | good |
| Ex. 12 | excellent | excellent | good | excellent | excellent | good |
| Ex. 13 | excellent | excellent | good | excellent | excellent | good |
| Ex. 14 | excellent | excellent | good | excellent | excellent | good |
| Ex. 15 | excellent | excellent | good | excellent | excellent | good |
| Ex. 16 | excellent | excellent | good | excellent | excellent | good |
| Ex. 17 | excellent | excellent | good | excellent | excellent | good |
| Ex. 18 | excellent | good | good | good | good | good |
| Ex. 19 | excellent | excellent | good | excellent | excellent | good |
| Ex. 20 | excellent | excellent | good | excellent | excellent | good |
| Ex. 21 | excellent | excellent | good | excellent | excellent | good |

(continued)

|  | Evaluation 1: Liquidus-line temperature | Evaluation 2: Denseness of solder structure | Evaluation 3: Drawability | Evaluation 4: Tensile strength | Evaluation 5: Homogeneous refinement of joint interface | Comprehensive evaluation |
|---|---|---|---|---|---|---|
| Ex. 22 | excellent | excellent | good | excellent | excellent | good |
| Ex. 23 | excellent | excellent | good | good | excellent | good |
| Ex. 24 | excellent | excellent | good | excellent | excellent | good |
| Ex. 25 | excellent | excellent | good | good | excellent | good |
| Ex. 26 | excellent | excellent | good | good | excellent | good |
| Ex. 27 | excellent | excellent | good | good | excellent | good |

Table 2

| | Sn | Ag | Cu | Sb | In | Ni | Bi | Co | Others | Relation(1) Sn/Cu | Relation(2) Ag×Ni | Relation(3) Bi/(In+Sb) | Relation(4) (In+Sb)/(Ag+In+Bi) |
|---|---|---|---|---|---|---|---|---|---|---|---|---|---|
| Ex.28 | Bal. | 3.0 | 0.7 | 2.00 | 3.0 | 0.05 | 5.0 | | | 123 | 0.15 | 1.00 | 0.455 |
| Ex.29 | Bal. | 3.0 | 0.7 | 2.00 | 3.0 | 0.05 | 1.0 | 0.010 | | 129 | 0.15 | 0.20 | 0.714 |
| Ex.30 | Bal. | 3.0 | 0.7 | 2.00 | 3.0 | 0.05 | 1.0 | 0.100 | | 129 | 0.15 | 0.20 | 0.714 |
| Ex.31 | Bal. | 3.4 | 0.7 | 0.05 | 3.0 | 0.03 | 0.5 | 0.010 | | 132 | 0.10 | 0.16 | 0.442 |
| Ex.32 | Bal. | 3.0 | 0.7 | 2.00 | 4.0 | 0.05 | 1.0 | 0.001 | Fe:0.015 | 127 | 0.15 | 0.17 | 0.750 |
| Ex.33 | Bal. | 3.0 | 0.7 | 2.00 | 4.0 | 0.05 | 1.0 | 0.008 | Fe:0.015 | 127 | 0.15 | 0.17 | 0.750 |
| Ex.34 | Bal. | 3.0 | 0.7 | 2.00 | 4.0 | 0.05 | 1.0 | 0.010 | Fe:0.010 | 127 | 0.15 | 0.17 | 0.750 |
| Ex.35 | Bal. | 3.0 | 0.7 | 2.00 | 4.0 | 0.05 | 1.0 | 0.010 | Fe:0.015 | 127 | 0.15 | 0.17 | 0.750 |
| Ex.36 | Bal. | 3.0 | 0.7 | 2.00 | 4.0 | 0.05 | 1.0 | 0.001 | Fe:0.010 | 127 | 0.15 | 0.17 | 0.750 |
| Ex.37 | Bal. | 3.0 | 0.7 | 2.00 | 4.0 | 0.05 | 1.0 | 0.008 | Fe:0.010 | 127 | 0.15 | 0.17 | 0.750 |
| Ex.38 | Bal. | 3.0 | 0.7 | 2.00 | 4.0 | 0.05 | 1.0 | | Zr:0.015 | 127 | 0.15 | 0.17 | 0.750 |
| Ex.39 | Bal. | 3.0 | 0.7 | 2.00 | 4.0 | 0.05 | 1.0 | | Fe:0.015 | 127 | 0.15 | 0.17 | 0.750 |
| Ex.40 | Bal. | 3.0 | 0.7 | 2.00 | 4.0 | 0.05 | 1.0 | | Ge:0.015 | 127 | 0.15 | 0.17 | 0.750 |
| Ex.41 | Bal. | 3.0 | 0.7 | 2.00 | 4.0 | 0.05 | 1.0 | | Ga:0.015 | 127 | 0.15 | 0.17 | 0.750 |
| Ex.42 | Bal. | 3.0 | 0.7 | 2.00 | 4.0 | 0.05 | 1.0 | | P:0.015 | 127 | 0.15 | 0.17 | 0.750 |
| Ex.43 | Bal. | 3.0 | 0.7 | 2.00 | 4.0 | 0.05 | 1.0 | | As:0.015 | 127 | 0.15 | 0.17 | 0.750 |
| Ex.44 | Bal. | 3.0 | 0.7 | 2.00 | 4.0 | 0.05 | 1.0 | | Pb:0.015 | 127 | 0.15 | 0.17 | 0.750 |
| Ex.45 | Bal. | 3.0 | 0.7 | 2.00 | 4.0 | 0.05 | 1.0 | | Zn:0.015 | 127 | 0.15 | 0.17 | 0.750 |
| Ex.46 | Bal. | 3.0 | 0.7 | 2.00 | 4.0 | 0.05 | 1.0 | | Mg:0.015 | 127 | 0.15 | 0.17 | 0.750 |
| Ex.47 | Bal. | 3.0 | 0.7 | 2.00 | 4.0 | 0.05 | 1.0 | | Cr:0.015 | 127 | 0.15 | 0.17 | 0.750 |
| Ex.48 | Bal. | 3.0 | 0.7 | 2.00 | 4.0 | 0.05 | 1.0 | | Ti:0.015 | 127 | 0.15 | 0.17 | 0.750 |
| Ex.49 | Bal. | 3.0 | 0.7 | 2.00 | 4.0 | 0.05 | 1.0 | | Mn:0.015 | 127 | 0.15 | 0.17 | 0.750 |
| Ex.50 | Bal. | 3.0 | 0.7 | 2.00 | 4.0 | 0.05 | 1.0 | | Mo:0.015 | 127 | 0.15 | 0.17 | 0.750 |
| Ex.51 | Bal. | 3.0 | 0.7 | 2.00 | 4.0 | 0.05 | 1.0 | | Pt:0.015 | 127 | 0.15 | 0.17 | 0.750 |
| Ex.52 | Bal. | 3.0 | 0.7 | 2.00 | 4.0 | 0.05 | 1.0 | | Pd:0.015 | 127 | 0.15 | 0.17 | 0.750 |

| | Sn | Ag | Cu | Sb | In | Ni | Bi | Co | Others | Relation(1) Sn/Cu | Relation(2) Ag×Ni | Relation(3) Bi/(In+Sb) | Relation(4) (In+Sb)/(Ag+In+Bi) |
|---|---|---|---|---|---|---|---|---|---|---|---|---|---|
| Ex.53 | Bal. | 3.0 | 0.7 | 2.00 | 4.0 | 0.05 | 1.0 | | Au:0.015 | 127 | 0.15 | 0.17 | 0.750 |
| Ex.54 | Bal. | 3.0 | 0.7 | 2.00 | 4.0 | 0.05 | 1.0 | | Al:0.015 | 127 | 0.15 | 0.17 | 0.750 |

EP 4 393 635 A1

Table 2 continued

| | Evaluation 1: Liquidus-line temperature | Evaluation 2: Denseness of solder structure | Evaluation 3: Drawability | Evaluation 4: Tensile strength | Evaluation 5: Homogeneous refinement of joint interface | Comprehensive evaluation |
|---|---|---|---|---|---|---|
| Ex. 28 | excellent | excellent | good | good | excellent | good |
| Ex. 29 | excellent | excellent | good | excellent | excellent | good |
| Ex. 30 | excellent | excellent | good | excellent | excellent | good |
| Ex. 31 | excellent | excellent | good | excellent | excellent | good |
| Ex. 32 | excellent | excellent | good | excellent | excellent | good |
| Ex. 33 | excellent | excellent | good | excellent | excellent | good |
| Ex. 34 | excellent | excellent | good | excellent | excellent | good |
| Ex. 3 5 | excellent | excellent | good | excellent | excellent | good |
| Ex. 36 | excellent | excellent | good | excellent | excellent | good |
| Ex. 37 | excellent | excellent | good | excellent | excellent | good |
| Ex. 38 | excellent | excellent | good | excellent | excellent | good |
| Ex. 39 | excellent | excellent | good | excellent | excellent | good |
| Ex. 40 | excellent | excellent | good | excellent | excellent | good |
| Ex. 41 | excellent | excellent | good | excellent | excellent | good |
| Ex. 42 | excellent | excellent | good | excellent | excellent | good |
| Ex. 43 | excellent | excellent | good | excellent | excellent | good |
| Ex. 44 | excellent | excellent | good | excellent | excellent | good |
| Ex. 45 | excellent | excellent | good | excellent | excellent | good |
| Ex. 46 | excellent | excellent | good | excellent | excellent | good |
| Ex. 47 | excellent | excellent | good | excellent | excellent | good |
| Ex. 48 | excellent | excellent | good | excellent | excellent | good |

(continued)

| | Evaluation 1: Liquidus-line temperature | Evaluation 2: Denseness of solder structure | Evaluation 3: Drawability | Evaluation 4: Tensile strength | Evaluation 5: Homogeneous refinement of joint interface | Comprehensive evaluation |
|---|---|---|---|---|---|---|
| Ex. 49 | excellent | excellent | good | excellent | excellent | good |
| Ex. 50 | excellent | excellent | good | excellent | excellent | good |
| Ex. 51 | excellent | excellent | good | excellent | excellent | good |
| Ex. 52 | excellent | excellent | good | excellent | excellent | good |
| Ex. 53 | excellent | excellent | good | excellent | excellent | good |
| Ex. 54 | excellent | excellent | good | excellent | excellent | good |

Table 3

| | Sn | Ag | Cu | Sb | In | Ni | Bi | Co | Others | Relation(1) Sn/Cu | Relation(2) Ag×Ni | Relation(3) Bi/(In+Sb) | Relation(4) (In+Sb)/ (Ag+In+Bi) |
|---|---|---|---|---|---|---|---|---|---|---|---|---|---|
| Ex.55 | Bal. | 3.0 | 0.7 | 2.00 | 4.0 | 0.05 | 1.0 | | Si:0.015 | 127 | 0.15 | 0.17 | 0.750 |
| Ex.56 | Bal. | 3.0 | 0.7 | 2.00 | 4.0 | 0.05 | 1.0 | 0.010 | Zr:0.005. Fe: 0.005, Ge:0.005, Ga: 0.005, P:0.005, As: 0.005, Pb:0.005, Zn: 0.005, Mg:0.005, Cr: 0.005, Ti:0.005, Mn: 0.005, Mo:0.005, Pt: 0.005, Pd:0.005, Au: 0.005, Al:0.005, Si:0.005 | 127 | 0.15 | 0.17 | 0.750 |
| Comp. Ex.1 | Bal. | 0.1 | 0.7 | 0.08 | 2.0 | 0.07 | 4.5 | 0.003 | | 132 | 0.01 | 2.16 | 0.315 |
| Comp. Ex.2 | Bal. | 0.9 | 0.7 | 2.00 | 3.0 | 0.05 | 1.0 | | | 132 | 0.05 | 0.20 | 1.020 |
| Comp. Ex.3 | Bal. | 3.9 | 0.7 | 2.00 | 3.0 | 0.05 | 1.0 | | | 128 | 0.20 | 0.20 | 0.633 |
| Comp. Ex.4 | Bal. | 3.0 | 0.3 | 2.00 | 3.0 | 0.05 | 1.0 | | | 302 | 0.15 | 0.20 | 0.714 |
| Comp. Ex.5 | Bal. | 3.0 | 0.3 | 3.00 | 2.5 | 0.04 | - | 0.010 | | 304 | 0.12 | - | 1.000 |
| Comp. Ex.6 | Bal. | 3.0 | 0.9 | 2.00 | 3.0 | 0.05 | 1.0 | | | 100 | 0.15 | 0.20 | 0.714 |

(continued)

| | Sn | Ag | Cu | Sb | In | Ni | Bi | Co | Others | Relation(1) Sn/Cu | Relation(2) Ag×Ni | Relation(3) Bi/(In+Sb) | Relation(4) (In+Sb)/ (Ag+In+Bi) |
|---|---|---|---|---|---|---|---|---|---|---|---|---|---|
| Comp. Ex.7 | Bal. | 1.2 | _0.9_ | 1.00 | 1.0 | _-_ | 2.5 | | | 104 | - | 1.25 | 0.426 |
| Comp. Ex.8 | Bal. | 3.0 | 0.5 | _-_ | 4.0 | 0.05 | 1.5 | 0.005 | | 182 | 0.15 | 0.38 | 0.471 |
| Comp. Ex.9 | Bal. | 3.0 | 0.7 | _0.02_ | 3.0 | 0.05 | 1.0 | | | 132 | 0.15 | 0.33 | 0.431 |
| Comp. Ex.10 | Bal. | 3.0 | 0.7 | _3.00_ | 3.0 | 0.03 | 3.2 | 0.008 | | 124 | 0.09 | 0.53 | 0.652 |
| Comp. Ex.11 | Bal. | 1.0 | 0.7 | 1.50 | _1.0_ | 0.05 | 1.0 | 0.030 | | 135 | 0.05 | 0.40 | 0.833 |
| Comp. Ex.12 | Bal. | 3.0 | 0.5 | 1.50 | _4.3_ | 0.05 | 0.5 | 0.005 | | 180 | 0.15 | 0.09 | 0.744 |
| Comp. Ex.13 | Bal. | 3.0 | 0.7 | 2.00 | 3.0 | _0.005_ | 1.0 | | | 129 | 0.02 | 0.20 | 0.714 |
| Comp. Ex.14 | Bal. | 3.0 | 0.5 | 1.00 | 4.0 | _0.15_ | 0.5 | | | 182 | 0.45 | 0.10 | 0.667 |
| Comp. Ex.15 | Bal. | 3.4 | 0.7 | 2.50 | 1.1 | 0.07 | _-_ | | | 132 | 0.24 | - | 0.800 |
| Comp. Ex.16 | Bal. | 3.0 | 0.7 | 2.00 | 3.0 | 0.05 | _0.05_ | | | 130 | 0.15 | 0.01 | 0.826 |
| Comp. Ex.17 | Bal. | 3.0 | 0.7 | 2.00 | 3.0 | 0.05 | 5.5 | | | 123 | 0.15 | 1.10 | 0.435 |
| Comp. Ex.18 | Bal. | 3.0 | 0.7 | 3.00 | 3.0 | _-_ | _6.0_ | | | 120 | - | 1.00 | 0.500 |

* The underline indicates that it does not fall within the scope of the present invention.

Table 3 continued

| | Evaluation 1: Liquidus-line temperature | Evaluation 2: Denseness of solder structure | Evaluation 3: Drawability | Evaluation 4: Tensile strength | Evaluation 5: Homogeneous refinement of joint interface | Comprehensive evaluation |
|---|---|---|---|---|---|---|
| Ex.55 | excellent | excellent | good | excellent | excellent | good |
| Ex.56 | excellent | excellent | good | excellent | excellent | good |
| Comp. Ex.1 | good | poor | poor | good | poor | poor |
| Comp. Ex.2 | good | poor | poor | good | poor | poor |
| Comp. Ex.3 | good | poor | poor | good | good | poor |
| Comp. Ex.4 | poor | good | good | good | good | poor |
| Comp. Ex.5 | poor | good | good | poor | good | poor |
| Comp. Ex.6 | poor | good | good | good | good | poor |
| Comp. Ex.7 | poor | good | good | good | poor | poor |
| Comp. Ex.8 | good | good | poor | good | good | poor |
| Comp. Ex.9 | good | good | poor | good | good | poor |
| Comp. Ex.10 | poor | good | good | good | good | poor |
| Comp. Ex.11 | good | good | poor | good | poor | poor |
| Comp. Ex.12 | good | poor | poor | good | good | poor |
| Comp. Ex.13 | good | good | good | good | poor | poor |
| Comp. Ex.14 | poor | good | good | good | good | poor |
| Comp. Ex.15 | good | good | good | poor | good | poor |
| Comp. Ex.16 | good | good | poor | poor | good | poor |
| Comp. Ex.17 | good | good | poor | poor | good | poor |
| Comp. Ex.18 | good | good | poor | poor | poor | poor |

As is clear from Tables 1 to 3, it was found that constituent elements of Examples 1 to 56 were all proper, and their liquidus-line temperatures were within a predetermined range. In addition, the structures of the solder alloys were dense and showed excellent drawability and tensile strength. In addition, the structures at joint interfaces were homogeneous and fine. It was confirmed that Examples 2 to 4, 7, 8, 11 to 17, 19 to 22, 24, and 29 to 56 satisfying the relations (1) to (4) achieved excellent results in all evaluation items.

On the other hand, in Comparative Examples 1 to 3, due to an excessive or insufficient Ag content, the alloy structure did not become dense, and had poor drawability.

In Comparative Examples 4 to 7, due to an excessive or insufficient Cu content, the liquidus-line temperature was not proper.

In Comparative Examples 8 and 9, due to a low Sb content, the drawability was poor.

In Comparative Example 10, due to a high Sb content, the liquidus-line temperature was not proper.

In Comparative Examples 11 and 12, due to an excessive or insufficient In content, the drawability was poor.

In Comparative Example 13, due to a low Ni content, homogeneous densification of a joint interface could not be observed.

In Comparative Example 14, due to a high Ni content, the liquidus-line temperature was not proper.

In Comparative Examples 15 and 16, due to a low Bi content, the tensile strength was poor.

In Comparative Examples 17 and 18, due to a high Bi content, the drawability and the tensile strength were poor.

These results will be described by using the drawings. Fig. 2 is sectional SEM photographs of solder alloys, Fig. 2A illustrates that in Example 3, and Fig. 2B illustrates that in Comparative Example 3. As is clear from Fig. 2, it could be confirmed that the solder structure was dense in Example 3. On the other hand, in Comparative Example 3, $Ag_3Sn$ was larger than 15 $\mu$m, so that crystal grains were confirmed to have all coarsened. As described, although the structure became dense and excellent effects were exerted in Examples in which contents of the constituent elements were proper, the structure did not become dense and the effects deteriorated in Comparative Examples in which a content of at least one of the constituent elements was not proper.

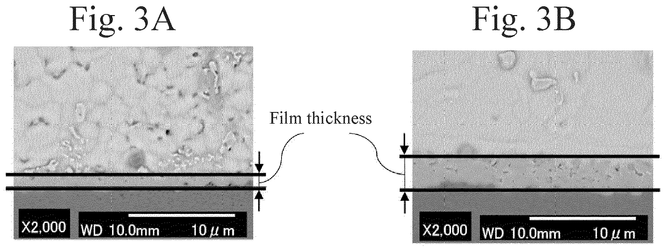

Fig. 3 is sectional SEM photographs of solder alloys, Fig. 3A illustrates that in Example 3, and Fig. 3B illustrates that in Comparative Example 13. In Example 3, an intermetallic compound that precipitated at a joint interface was found to be homogeneous and fine. On the other hand, in Comparative Example 13, homogeneous densification of a joint interface could not be observed.

**Claims**

1. A solder alloy having an alloy composition consisting of, by mass%,

   Ag: 1.0 to 3.8%,
   Cu: 0.4 to 0.8%,
   Sb: 0.03 to 2.90%,
   In: 1.1 to 4.2%,
   Ni: 0.01 to 0.14%,
   Bi: 0.1 to 5.0%, with the balance being Sn.

2. The solder alloy according to claim 1, further containing, by mass%, Co: 0.1% or less, wherein the alloy composition satisfies the following relation (3):

$$0.10 \le \text{Bi}/(\text{In}+\text{Sb}) \le 0.32 \quad \text{Relation (3)}$$

   wherein Bi, In, and Sb in the relation (3) above each represent the contents (mass%) thereof in the alloy composition.

3. The solder alloy according to claim 1 or 2,

   wherein the alloy composition satisfies at least one of the following relations (1) and (4):

$$113 \le \text{Sn}/\text{Cu} \le 165 \quad \text{Relation (1)}$$

$$0.432 \le (\text{In}+\text{Sb})/(\text{Ag}+\text{In}+\text{Bi}) \le 0.999 \quad \text{Relation (4)}$$

   wherein Sn, Cu, Ag, Bi, In, and Sb in the relations (1) and (4) above each represent the contents (mass%) thereof in the alloy composition.

4. The solder alloy according to any one of claims 1 to 3, further containing, by mass%, at least one of Zr, Fe, Ge, Ga, P, As, Pb, Zn, Mg, Cr, Ti, Mn, Mo, Pt, Pd, Au, Al, and Si: 0.1% or less in total,

   wherein the alloy composition satisfies the following relation (2):

$$0.06 \leq Ag \times Ni \leq 0.19 \quad \text{Relation (2)}$$

   wherein Ag and Ni in the relation (2) above each represent the contents (mass%) thereof in the alloy composition.

5. The solder alloy according to claim 1, further containing, by mass%, Co: 0.1% or less, and at least one of Zr, Fe, Ge, Ga, As, Pb, Zn, Mg, Cr, Ti, Mn, Mo, Pt, Pd, Au, Al, and Si: 0.1% or less in total.

6. The solder alloy according to claim 5,

   wherein further, by mass%, the alloy composition satisfies the following relation (3):

$$0.10 \leq Bi/(In+Sb) \leq 0.32 \quad \text{Relation (3)}$$

   wherein Bi, In, and Sb in the relation (3) above each represent the contents (mass%) thereof in the alloy composition.

7. The solder alloy according to any one of claims 1 to 3,

   wherein the alloy composition satisfies the following relation (2):

$$0.06 \leq Ag \times Ni \leq 0.19 \quad \text{Relation (2)}$$

   wherein Ag and Ni in the relation (2) above each represent the contents (mass%) thereof in the alloy composition.

8. A solder ball consisting of the solder alloy according to any one of claims 1 to 7.

9. A solder preform consisting of the solder alloy according to any one of claims 1 to 7.

10. A solder paste comprising a solder powder consisting of the solder alloy according to any one of claims 1 to 7.

11. A solder joint comprising the solder alloy according to any one of claims 1 to 7.

# Fig. 1A

Area: small

# Fig. 1B

Area: large

# Fig. 2A

# Fig. 2B

## Fig. 3A

## Fig. 3B

Film thickness

## INTERNATIONAL SEARCH REPORT

| | International application No. |
|---|---|
| | **PCT/JP2022/036553** |

**A.    CLASSIFICATION OF SUBJECT MATTER**

*B23K 35/26*(2006.01)i; *B23K 35/22*(2006.01)i; *C22C 13/00*(2006.01)i; *C22C 13/02*(2006.01)i
FI:    B23K35/26 310A; B23K35/22 310A; C22C13/00; C22C13/02

According to International Patent Classification (IPC) or to both national classification and IPC

**B.    FIELDS SEARCHED**

Minimum documentation searched (classification system followed by classification symbols)

B23K35/26; B23K35/22; C22C13/00; C22C13/02

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
|---|---|---|
| X | JP 2017-170522 A (TAMURA CORPORATION) 28 September 2017 (2017-09-28) paragraphs [0022]-[0042], table 1 | 5, 8-11 |
| A | | 1-4, 6-7 |
| X | WO 2014/013847 A1 (HARIMA CHEMICALS, INCORPORATED) 23 January 2014 (2014-01-23) paragraphs [0026]-[0063], [0070]-[0085], tables 1-2 | 5, 8-11 |
| A | | 1-4, 6-7 |
| A | CN 108994480 A (YUNNAN TIN MATERIAL CO., LTD.) 14 December 2018 (2018-12-14) | 1-11 |
| A | JP 2012-106280 A (HARIMA CHEMICALS, INCORPORATED) 07 June 2012 (2012-06-07) | 1-11 |
| A | WO 2020/137535 A1 (TAMURA CORPORATION) 02 July 2020 (2020-07-02) | 1-11 |

☑ Further documents are listed in the continuation of Box C.      ☑ See patent family annex.

| | |
|---|---|
| *    Special categories of cited documents: | "T"    later document published after the international filing date or priority date and not in conflict with the application but cited to understand the principle or theory underlying the invention |
| "A"    document defining the general state of the art which is not considered to be of particular relevance | |
| "E"    earlier application or patent but published on or after the international filing date | "X"    document of particular relevance; the claimed invention cannot be considered novel or cannot be considered to involve an inventive step when the document is taken alone |
| "L"    document which may throw doubts on priority claim(s) or which is cited to establish the publication date of another citation or other special reason (as specified) | "Y"    document of particular relevance; the claimed invention cannot be considered to involve an inventive step when the document is combined with one or more other such documents, such combination being obvious to a person skilled in the art |
| "O"    document referring to an oral disclosure, use, exhibition or other means | |
| "P"    document published prior to the international filing date but later than the priority date claimed | "&"    document member of the same patent family |

| Date of the actual completion of the international search | Date of mailing of the international search report |
|---|---|
| **24 November 2022** | **06 December 2022** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

24

**INTERNATIONAL SEARCH REPORT**

International application No.

**PCT/JP2022/036553**

**C.    DOCUMENTS CONSIDERED TO BE RELEVANT**

| Category* | Citation of document, with indication, where appropriate, of the relevant passages | Relevant to claim No. |
|---|---|---|
| A | JP 2018-122323 A (TAMURA CORPORATION) 09 August 2018 (2018-08-09) | 1-11 |
| A | JP 2019-147190 A (TAMURA CORPORATION) 05 September 2019 (2019-09-05) | 1-11 |
| A | JP 2015-20182 A (HARIMA CHEMICALS, INCORPORATED) 02 February 2015 (2015-02-02) | 1-11 |

Form PCT/ISA/210 (second sheet) (January 2015)

**INTERNATIONAL SEARCH REPORT**
Information on patent family members

International application No.

**PCT/JP2022/036553**

| Patent document cited in search report | | | Publication date (day/month/year) | Patent family member(s) | | | Publication date (day/month/year) |
|---|---|---|---|---|---|---|---|
| JP | 2017-170522 | A | 28 September 2017 | US | 2018/0029169 | A1 | |
| | | | | paragraphs [0024]-[0059], table 1 | | | |
| | | | | WO | 2017/164194 | A1 | |
| | | | | EP | 3321025 | A1 | |
| | | | | CN | 107427969 | A | |
| | | | | KR | 10-2018-0008883 | A | |
| | | | | KR | 10-2018-0015711 | A | |
| | | | | CN | 108500499 | A | |
| | | | | MX | 2018011176 | A | |
| | | | | BR | 112018068596 | A2 | |
| | | | | HU | E052698 | T2 | |
| | | | | ES | 2840124 | T3 | |
| | | | | PH | 12018500431 | A1 | |
| WO | 2014/013847 | A1 | 23 January 2014 | US | 2015/0305167 | A1 | |
| | | | | paragraphs [0027]-[0064], [0071]-[0086], tables 1-2 | | | |
| | | | | WO | 2014/013632 | A1 | |
| | | | | EP | 2875898 | A1 | |
| | | | | EP | 3257617 | A1 | |
| | | | | CN | 104507633 | A | |
| | | | | KR | 10-2015-0029705 | A | |
| | | | | TW | 201408787 | A | |
| | | | | CN | 107052611 | A | |
| | | | | CN | 107214430 | A | |
| | | | | ES | 2672511 | T3 | |
| | | | | MY | 154604 | A | |
| CN | 108994480 | A | 14 December 2018 | (Family: none) | | | |
| JP | 2012-106280 | A | 07 June 2012 | US | 2012/0175020 | A1 | |
| | | | | WO | 2012/056753 | A1 | |
| | | | | EP | 2468450 | A1 | |
| | | | | CN | 102574251 | A | |
| | | | | TW | 201217543 | A | |
| | | | | MX | 2011011353 | A | |
| | | | | KR | 10-1142814 | B1 | |
| WO | 2020/137535 | A1 | 02 July 2020 | JP | 2020-99933 | A | |
| | | | | US | 2021/0001433 | A1 | |
| | | | | EP | 3903993 | A1 | |
| | | | | CN | 111801193 | A | |
| | | | | KR | 10-2021-0103389 | A | |
| JP | 2018-122323 | A | 09 August 2018 | (Family: none) | | | |
| JP | 2019-147190 | A | 05 September 2019 | (Family: none) | | | |
| JP | 2015-20182 | A | 02 February 2015 | (Family: none) | | | |

Form PCT/ISA/210 (patent family annex) (January 2015)

**EP 4 393 635 A1**

**REFERENCES CITED IN THE DESCRIPTION**

**Patent documents cited in the description**

- JP 2017170464 A
- JP 2014037005 A
- JP 6060199 B